# EUROPÄISCHE PATENTANMELDUNG

(11) **EP 1 275 627 A1**
(43) Veröffentlichungstag der Anmeldung: **15.01.2003**
(21) Anmeldenummer: 02450128.0
(22) Anmeldetag: 27.05.2002
(51) Int. Cl.: C05F 17/02

(54) **Kompostiertrommel**

(30) Priorität: 10.07.2001 AT 10792001
(71) Anmelder: Spitzer, Herbert, 8250 Vorau (AT)
(72) Erfinder: Spitzer, Herbert, 8250 Vorau (AT)
(74) Vertreter: Gibler, Ferdinand, Dipl.Ing. Dr. techn.

(57) **Zusammenfassung**

Kompostiertrommel zur Entsorgung von biologischen Abfällen, umfassend einen Trommelkörper (7), welcher vorzugsweise zylindrisch ausgebildet ist und in einer Rahmenkonstruktion (1) drehbar gelagert ist, wobei der Trommelkörper (7) aus mehreren einzelnen Wandsegmenten (20) gebildet ist, wobei alle oder mehrere Wandsegmente (20) auf Teleskopstangen (16) befestigt sind, welche die Bewegung der Wandsegmente (20) in zumindest eine geschlossenen Position (Pg) und eine offenen Position (Po) erlauben.

## Beschreibung

Die Erfindung betrifft eine Kompostiertrommel zur Entsorgung von biologischen Abfällen, umfassend einen Trommelkörper, welcher vorzugsweise zylindrisch ausgebildet ist und in einer Rahmenkonstruktion drehbar gelagert ist, wobei der Trommelkörper aus mehreren einzelnen Wandsegmenten gebildet ist.

Derartige Kompostiertrommeln sind im Stand der Technik bekannt und weisen meist einen aus Holz, Metall oder Kunststoff geformten Hohlkörper auf, in welchen das zu verrottende Gut eingefüllt wird. Zur Durchmischung des Rottungsgutes mit Luft wird der Behälter rotierend gelagert, weiters sind möglicherweise Schaufeln oder ähnliches vorgesehen, um eine möglichst gute Durchmischung zu erreichen. Für die Luftzufuhr ist die Behälterwand mit Löchern versehen bzw. sind eigene Lüftungsrohre z.B. in der Längsachse der Trommel vorhanden.

Bei all den bekannten Ausführungen ergibt sich das Problem, dass die Behälterwand und insbesondere die Belüftungslöcher sehr leicht verschmutzen. Dies bedeutet aber, dass durch das Verkleben der Lüftungslöcher die gewünschte Sauerstoffzufuhr nicht mehr ungestört erfolgen kann und der Rottungsprozeß verlangsamt wird.

Es ist Aufgabe der vorliegenden Erfindung, eine Kompostiertrommel der eingangs genannten Art vorzustellen, das diesen Nachteil beseitigt und es erlaubt, dem Problem des Verschmutzens weitgehend entgegenzuwirken und eine gute Durchlüftung des Trommelkörpers zu gewährleisten.

Erfindungsgemäß wird dies dadurch erreicht, dass alle oder mehrere Wandsegmente auf Teleskopstangen befestigt sind, welche die Bewegung der Wandsegmente in zumindest eine geschlossenen Position und eine offenen Position erlauben.

Auf diese Weise erhält man eine Kompostiertrommel, die leicht zu öffnen und leicht zu reinigen ist. Die Befüllung und Entleerung des Trommelkörpers erfolgt dadurch, dass einzelne Wandsegmente in die offenen Position gebracht werden. Außerdem kann der Trommelkörper durch die geöffneten Wandsegmente belüftet werden. Durch das Öffnen und Schließen der Wandsegmente erfolgt weiters ein eigenständiges Reinigen des Trommelkörpers, da großflächige Verunreinigungen aufgebrochen werden. Dadurch wird ein Verkleben sicher verhindert.

Gemäß einer weiteren Variante der Erfindung kann vorgesehen sein, dass die Teleskopstangen durch Federn in die Richtung einer Position vorgespannt sind. Dies bietet den Vorteil, dass die Wandsegmente im Normalbetrieb von sich aus eine bestimmte Position einnehmen. Dadurch müssen diese nicht eigens durch einen Haltemechanismus in der bevorzugten Position gehalten werden.

In Weiterbildung der Erfindung kann vorgesehen sein, dass die Teleskopstangen jeweils ein Außenrohr und ein in diesem geführtes inneres Rohr aufweisen, wobei ein Wandsegment auf einem dieser Rohre festgelegt ist und dass jenes Rohr, auf welchem das Wandsegment festgelegt ist, gegenüber dem anderen Rohr durch eine Feder in Richtung der geschlossenen Position oder in Richtung der offenen Position vorgespannt ist. Dies stellt eine besonders einfache Konstruktion der Teleskopstange dar. Weiters ist es durch diese Ausführung möglich, einzelne Wandsegmente sehr einfach durch Herausziehen der mit den Wandsegmenten verbundenen inneren Rohre aus den Außenrohren aus dem Trommelkörper zu entfernen.

In weiterer Ausgestaltung der Erfindung kann eine an der Rahmenkonstruktion festgelegte Positionierungsvorrichtung vorgesehen sein, welche die die Wandsegmente tragenden Rohre der Teleskopstangen gegen die Vorspannkraft der Feder in Richtung der offenen Position oder in Richtung der geschlossenen Position bewegt. Dadurch, dass die Positionierungsvorrichtung an der Rahmenkonstruktion festgelegt ist, wird sie nicht mit dem Trommelkörper mitbewegt. Dies erlaubt es, die Position der Wandsegmente automatisch an den Drehwinkel des Trommelkörpers gegenüber der Rahmenkonstruktion anzupassen, also beispielsweise die im unteren Bereich des Trommelkörpers gelegenen Wandsegmente stets geschlossen zu halten.

Gemäß einer anderen Variante der Erfindung kann vorgesehen sein, dass auf den Wandsegmente tragenden Rohren Laufräder festgelegt sind und die Positionierungsvorrichtung durch zumindest eine bogenförmige Laufschiene gebildet ist, auf welche die Laufräder bei Umlaufen des Trommelkörpers aufgleiten. Dies stellt eine besonders einfache Konstruktion der Positionierungsvorrichtung dar. Die mechanische Verbindung ist dabei besonders sicher und verhindert bestmöglich ein ungewolltes Öffnen des Trommelkörpers.

In Weiterbildung der Erfindung kann vorgesehen sein, dass die Wandsegmente aus einem stark isolierenden Material, insbesondere aus Holz gefertigt sind. Dadurch ist es möglich ohne zusätzliche Heizung hohe Temperaturen im Inneren des Trommelkörpers zu erhalten. Damit ergibt sich eine schnellere Umsetzung. Durch die hohen Temperaturen, welche relativ gleichmäßig bei 70° C liegen, erhält man eine sehr gute Verrottung und ein Prozessende in ca. zwanzig Tagen. Damit ergibt sich ein insgesamt niedriger Energieaufwand. Durch die Ausführung aus Holz erfolgt der Prozess zudem nahezu geruchsfrei. Weiters wird ungewünschtem Schädlingsbefall vorgebeugt.

Gemäß einer weiteren Ausgestaltung der Erfindung kann vorgesehen sein, dass zumindest ein Schneidmesser vorgesehen ist, welches an der Rahmenkonstruktion verschwenkbar gelagert und durch in den Wandsegmenten vorgesehene Schlitze in den Trommelkörper hinein verschwenkbar ist. Dies bietet den Vorteil, dass die Zerkleinerung der sich während des Rottungsprozesses bildenden Klumpen etc. nach der Verrottung erfolgen kann. Das Rottegut muß somit nicht vorher zerkleinert werden, zumal sich auch bei im voraus zerkleinerten Rottungsgut noch Klumpen im Trommelkörper bilden können.

Nach einer anderen Variante der Erfindung kann ein eine Vielzahl von Schneidmessern tragenden Schneidmesserbalken vorgesehen sein, der von einer Eingriffsposition, in welcher die Schneidmesser in den Trommelkörper hineinragen in eine ausgerückte Position, in welcher die Schneidmesser vollständig aus dem Trommelkörper heraus gezogen sind, verschwenkbar an der Rahmenkonstruktion festgelegt ist. Dies ermöglicht es auf besonders einfache Art und Weise die Schneidmesser ins Innere des Trommelkörpers zu klappen.

In weiterer Ausgestaltung der Erfindung kann ein auf den Schneidmesserbalken einwirkendes, diesen in die Eingriffsposition vorspannendes Gegengewicht vorgesehen sein. Dadurch erreicht man, dass die Schneidmesser im Fall eines besonders harten Klumpen nicht verletzt bzw. zerstört werden können. Bei einem besonders harten Klumpen klappen die Schneidmesser zurück, da die durch das Gegengewicht aufgebrachte Kraft nicht ausreicht, um die Schneidmesser im Inneren des Trommelkörpers zu halten.

In Weiterbildung der Erfindung kann vorgesehen sein, dass das Gegengewicht über einen Seilzug auf den Schneidmesserbalken einwirkt. Dies stellt eine besonders einfache Ausführung der Wirkverbindung zwischen dem Gegengewicht und dem Schneidmesserbalken dar.

Gemäß einer anderen Variante der Erfindung kann vorgesehen sein, dass zumindest ein weiteres Schneidmesser vorgesehen ist, welches am Trommelkörper, insbesondere an einem Wandsegment befestigt ist. Durch diese Ausführung kann ein sicheres Zerkleinern aller sich im Inneren des Trommelkörpers befindlichen Klumpen gewährleistet werden. Die Klumpen werden zwischen den feststehenden, mit der Rahmenkonstruktion verbundenen Messern und den umlaufenden, mit dem Trommelkörper verbundenen Messern zerschnitten.

Nach einer weiteren Ausführungsvariante der Erfindung kann vorgesehen sein, dass das weitere Schneidmesser an der Außenseite des Trommelkörpers verschwenkbar gelagert und durch die in den Wandsegmenten vorgesehene Schlitze in den Trommelkörper hinein verschwenkbar ist. Dies ermöglicht es, die weiteren Schneidmesser ebenfalls erst nach Beendigung des Rottungsprozesses zuzuschalten. Dadurch kommt das Rottungsgut während der gesamten Dauer des Rottungsprozesses nicht mit metallischen Gegenständen in Berührung.

Gemäß einer zusätzlichen Ausgestaltung der Erfindung kann vorgesehen sein, dass der Trommelkörper nach außen gerichtete Kuppen aufweist, wobei lediglich die außen gelegenen, die Kuppen bildenden Wandsegmente mit Schlitzen zum eingreifen der Messer versehen sind. Dies stellt eine besonders stabile Ausführungsform der Kompostiertrommel dar. Die weiter innen gelegenen Wandsegmente müssen hierbei keine Schlitze aufweisen und dienen so zur Stabilisierung des Trommelkörpers.

In Weiterbildung der Erfindung kann vorgesehen sein, dass die außen gelegenen, jeweils eine Kuppe bildenden Wandsegmente fest miteinander verbunden sind und dass die Kuppen als ganzes austauschbar am Trommelkörper angebracht sind. Damit gestaltet sich der Austausch ganzer Kuppen besonders einfach. Insbesondere können so eigene Kuppen vorgesehen sein, die beispielsweise spezielle Schlitze zum Einbringen zusätzlicher Werkzeuge wie Hammerwalzen etc. aufweisen. Diese können am Ende des Rottungsprozesses auf besonders einfache Art ausgetauscht werden.

Die Erfindung wird unter Bezugnahme auf die beigeschlossenen Zeichnungen, in welchen besonders bevorzugte Ausführungsbeispiele dargestellt sind, näher beschrieben. Dabei zeigt:
Fig. 1 eine erfindungsgemäße Kompostiertrommel im Aufriß;
Fig. 1a eine weitere erfindungsgemäße Kompostiertrommel im Aufriß;
Fig. 1b eine der Fig. 1a entsprechende Kompostiertrommel im Seitenriß;
Fig. 1c eine weitere erfindungsgemäße Kompostiertrommel im Seitenriß, mit außen liegenden Teleskopstangen 16;
Fig. 2 eine erfindungsgemäße Kompostiertrommel im Seitenriß, wobei der Bereich der Kuppen 27 hervorgehoben ist;
Fig. 3 eine Detailansicht einer erfindungsgemäßen Teleskopstange 16 mit Laufrad 18 und Laufschienen 22 im Aufriss;
Fig. 4a eine Detailansicht eines erfindungsgemäßen Wandsegments 20 mit Teleskopstange 16 im Seitenriss;
Fig. 4b eine Detailansicht eines erfindungsgemäßen geschlitzten, aus mehreren auf jeweils einer Teleskopstange 16 fixierten Segmenten 20' bestehenden Wandsegments 20 im Seitenriss
Fig. 4c eine Detailansicht eines weiteren erfindungsgemäßen geschlitzten, aus mehreren über einer Stahlbrücke 23 fixierten Segmenten 20' bestehenden Wandsegments 20 im Seitenriss;
Fig. 5 eine Detailansicht einer Stirnwand 29 mit erfindungsgemäßen Laufrad 18 im Aufriss und im Seitenriss und
Fig. 6 die Detailansicht einer erfindungsgemäßen Kompostiertrommel mit verlängerten Teleskopstangen 16 im Aufriss.

Bekannte Trommel-Kompostieranlagen weisen meist einen aus Holz, Metall oder Kunststoff geformten Hohlkörper auf, in welchen das zu verrottende Gut eingefüllt wird. Für einen optimalen aeroben Verrottungsprozess sind im wesentlichen die zwei Parameter Temperatur und Sauerstoffzufuhr maßgeblich. Die Temperaturerhöhung erfolgt durch den Dekompositionsprozeß selbst und kann durch zusätzliche Heizung bzw. Temperaturregelung gesteuert werden. Sinnvollerweise ist der Behälter meist in einem isolierenden Material ausgeformt. Zur Durchmischung des Verrottungsguts mit Luft wird der Behälter rotierend gelagert, weiters sind möglicherweise Schaufeln oder ähnliches vorgesehen, um eine noch bessere Durchmischung zu erreichen. Für die Luftzufuhr ist die Behälterwand mit Löchern versehen bzw. sind eigene Lüftungsrohre z.B. in der Längsachse der Trommel vorhanden. Die Drehgeschwindigkeit und die Luftzufuhr z.B. mittels Gebläse können elektronisch gesteuert werden.

Ein großes Problem bei herkömmliche Trommel-Kompostieranlagen stellt regelmäßig das Verschmutzen des Behälters und der Belüftungslöcher dar. Die vorliegende Erfindung sieht in diesem Zusammenhang eine einfache Methode vor, eine gute Durchlüftung zu gewährleisten und dabei dem Problem des Verschmutzens weitgehend entgegenzuwirken.

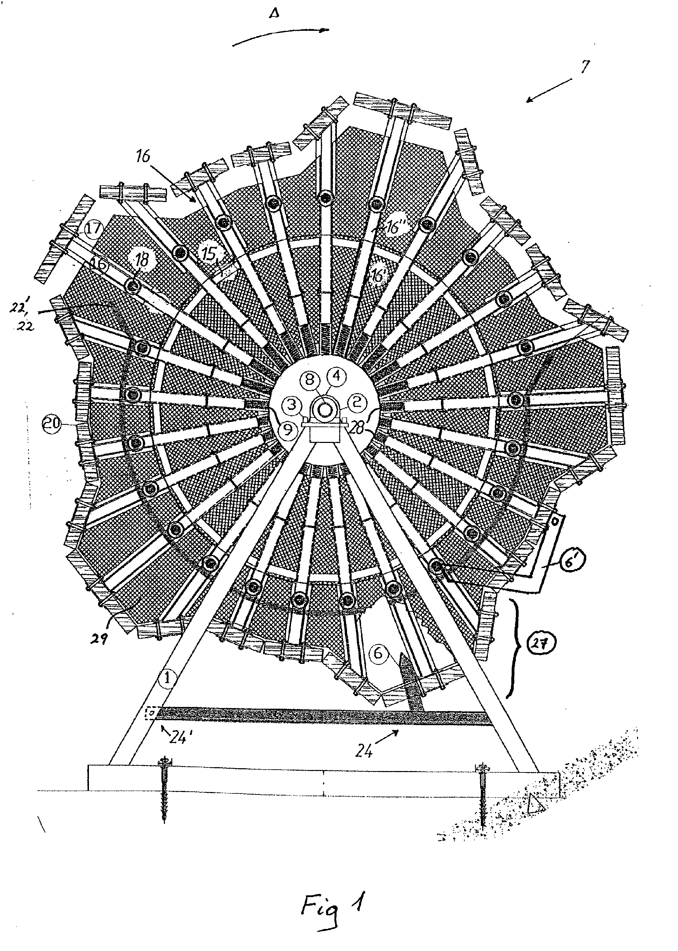

Fig. 1 zeigt den Aufbau einer erfindungsgemäßen Kompostiertrommel. Die Rahmenkonstruktion 1 umfasst zwei aus Formrohren verschweißte Dreiecksböcke. Beide Dreiecksböcke sind mittels Querversteifungen 5 (vgl. Fig.2), welche beispielsweise aus 80/80 Formrohren bestehen, zweimal miteinander verbunden, um der Rahmenkonstruktion 1 eine bessere Standfestigkeit zu geben. Die Rahmenkonstruktion 1 sowie die Grundkonstruktion des Trommelkörpers 7 besteht vorzugsweise aus grundierten und lackierten Formrohren bzw. Weißblechen. An den Dreiecksböcken befindet sich jeweils an der oberen Spitze ein Lagerbock 2 mit Rollenlager. Der Lagerbock 2 ist mittels zweier Schrauben 3 mit jedem Dreiecksbock verschraubt. Der Lagerbock 2 besitzt weiters einen Schmiernippel 4 durch den die Schmierung des Rollenlagers gewährleistet werden kann.

Ein Getriebemotor 7' ist auf der Rahmenkonstruktion 1 befestigt (Fig. 2). Mit diesem verbunden ist eine Trommelwelle bzw. Antriebswelle 8, welche vorzugsweise aus einem Formrohr gebildet ist. Die Verbindung zwischen Getriebemotor 7' und Antriebswelle 8 erfolgt über ein am Getriebemotor 7' befestigtes Kettenrad 11, eine Steuerkette 12 und ein weiteres Kettenrad 10, welches auf der Antriebswelle 8 befestigt ist. Dieses dient zur Übersetzung der Umdrehungsgeschwindigkeit. Die Übersetzung der Motorgeschwindigkeit erfolgt darüberhinaus über ein nicht eingezeichnetes Getriebe, das am Elektromotor angeflanscht ist. Durch die Teilung des Kettenrades 11 am Getriebemotor 7' kann die Leerlaufgeschwindigkeit eingestellt werden. Die Umdrehungsgeschwindigkeiten können aber auch mittels Frequenzumformer zusätzlich gesteuert werden. Damit kann die notwendige Geschwindigkeit leicht auf den jeweiligen Prozeß angepaßt werden.

Der Trommelkörper 7 besteht aus einer Vielzahl von Wandsegmenten 20. Diese sitzen auf Teleskopstangen 16 auf, welche an axial gelagerten Rundscheiben 9 befestigt sind und über diese mit der Antriebswelle 8 verbunden sind (Fig. 1, 3). Durch diese Konstruktion ist es möglich, die Wandsegmente 20 entlang des Verschubweges der Teleskopstangen 16 zu bewegen. Die ausgezogene Position der Teleskopstangen 16 entspricht dabei einer offenen (Po) Position, während die eingefahrene Position einer geschlossenen Position (Pg) des Trommelkörpers 7 entspricht. Die erfindungsgemäße Ausführung ermöglicht es somit durch Verschieben einiger der Wandsegmente 20 entlang des durch die Teleskopstangen 16 vorgegebenen Wegs, den Trommelkörper 7 an unterschiedlichen Positionen zu öffnen.

Die beiden Stirnseiten des Trommelkörpers 7 werden durch Stirnwände 29 gebildet. Vorzugsweise sind dabei die Teleskopstangen 16 an der Außenseite des Trommelkörpers 7, also außen an den Stirnwänden 29 angebracht.

Die Wandsegmente 20 werden mittels Torbandschrauben und einer Befestigungsplatte 17 mit den Teleskopstangen 16 verschraubt. Vorzugsweise sind zwei Teleskopstangen 16 pro Wandsegment 20 vorgesehen, welche jeweils im Bereich einer Stirnseite des Trommelkörpers 7 angeordnet sind. Die Kompostiertrommel weist in diesem Fall entsprechend zwei Rundscheiben 9 auf (Fig. 4a). Bei der dargestellten Ausführung sind die Teleskopstangen 16 weiters über Querstreben 23' miteinander verbunden. Die Querstreben 23' sind vorzugsweise mittels je eines Formrohrs ausgeführt.

Die Wandsegmente 20 sind vorzugsweise aus Fichtenholz gefertigt, beispielsweise mit einer Stärke von 50 mm, welches an der der Innenseite des Trommelkörpers 7 entsprechenden Seite gehobelt und gefasst ist. Durch die guten Isolationseigenschaften dieser Wandsegmente 20 erhält man hohe Temperaturen und dadurch eine schnelle Umsetzung des Rottungsprozesses.

Bei der in Fig. 1 dargestellten Ausführungsform sind je Rundscheibe 9 fünfundzwanzig Teleskopstangen 16 vorgesehen. Diese bestehen jeweils aus einem in einem Außenrohr 16' geführten inneren Rohr 16" (vgl. Fig. 3). Das Außenrohr 16' besteht beispielsweise aus einem Formrohr 50/50/4, das an seinem ersten Ende dicht mit der Rundscheibe 9 verschweißt ist. Die einzelnen Außenrohre 16' sind zusätzlich über eine Versteifung 15, welche beispielsweise aus ein Formrohr 30/30/3 besteht, miteinander verbunden. Die inneren Rohre 16" bestehen jeweils aus einem Formrohr 40/40/3, dessen innere, der Rundscheibe 9 näher liegende Stirnseite dicht verschweißt ist. Am gegenüberliegenden Ende ist eine Befestigungsplatte 17 aufgeschweißt, die zur Verschraubung des Wandsegments 20 dient.

Zwischen der inneren Stirnseite des inneren Rohres 16" und der Rundscheibe 9 sind Druck-Federn 28 angeordnet, welche die inneren Rohre 16" und damit die an diesen festgelegten Wandsegmente 20 nach außen drücken. Damit erreicht man in Abwesenheit einer Gegenkraft ein selbständiges Öffnen des Trommelkörpers 7 durch die Federn 28. Es ist aber auch möglich, die Wandsegmente 20 des Trommelkörpers 7 durch Zugfedern in Richtung der geschlossenen Position vorzuspannen. In diesem Fall ist für das Herausziehen einzelner Wandsegmente 20 eine entsprechende Gegenkraft aufzubringen.

Das Vorsehen der Federn 28 bzw. eines sonstigen Vorspannmechanismus ermöglicht es, beim Öffnen bzw. Schließen des Trommelkörpers 7 nur eine, d.h. entweder die offene (Po) oder die geschlossene Position (Pg) der Wandsegmente 20 fixieren zu müssen. Durch Öffnen einzelner Wandsegmente 20 kann beispielsweise ca. alle zwei Tage eine Belüftung erreicht werden.

Es sind natürlich viele unterschiedliche Ausführungsformen für die Teleskopstangen 16 möglich. Beispielsweise ist es möglich, die Rohre 16', 16" umgekehrt zu verwenden, d.h. mit einem inneren Rohr 16", welches an der Scheibe 9 festgelegt ist und einem Außenrohr 16', welches diesem gegenüber verschiebbar ist und welches das Wandsegment 20 trägt. Weiters können Hydraulik-Zylinder oder ähnliches für die Teleskopstangen 16 verwendet werden. Voraussetzung für die erfindungsgemäße Verwendung ist lediglich, dass die Teleskopstangen 16 eine radiale Verschiebung der Wandsegmente 20 ermöglichen.

Die Bewegung der einzelnen Wandsegmente 20 von ihrer geschlossenen (Pg) in ihre offene (Po) Position kann auf unterschiedliche Arten erfolgen. Fig. 1a und 1b zeigen eine Ausführungsform der Erfindung, bei der ein mitumlaufender Rahmen 1' drehbar auf der Rahmenkonstruktion 1 gelagert ist. Zur Bewegung der Wandsegmente 20 ist jedem Wandsegment 20 eine Antriebseinrichtung 40 zugeordnet. Die Antriebseinrichtungen 40 können unterschiedlich, beispielsweise als hydraulische, pneumatische oder elektrische Antriebseinrichtungen 40 ausgebildet sein. Fig. 1b, die eine der Fig. 1a analoge Ausführungsform im Seitenriss darstellt, zeigt auch die im folgenden noch genauer beschriebene Ausführung eines Wandsegments 20 aus einzelnen Segmenten 20'.

Bei entsprechenden Antriebseinrichtungen 40 kann auch auf eigene innen liegenden Teleskopstangen 16 verzichtet werden. In diesem Fall gelten die Antriebseinrichtungen 40 als Teleskopstangen 16 im Sinne der Erfindung. Es können auch Teleskopstangen 16 vorgesehen sein, die nicht mit der Drehachse des Trommelkörpers 7 über die Rundscheiben 9 verbunden, sondern außen am mitumlaufenden Rahmen 1' befestigt sind. Auch in diesem Fall ist es möglich, zur Verschiebung der Wandsegmente 20 durch geeignete Positionierungsvorrichtungen 22', Laufräder 18 an den Teleskopstangen 16 anzubringen

Unterschiedlich zu der in Fig. 1 gezeigten Ausführungsform sind in Fig. 1a nicht sämtliche Wandsegmente 20 verschiebbar gelagert. Die weiter innen gelegenen Wandsegmente 120 sind mittels geeigneter Befestigungsvorrichtungen 121 unmittelbar mit dem mitumlaufenden Rahmen 1' verbunden.

Bei der in Fig. 1 gezeigten Ausführungsform ist im mittleren Bereich des inneren Rohres 16" jeweils ein Laufrad 18 mit einer Schraube befestigt. Die Laufräder 18 dienen zur Verschiebung der Teleskopstangen 16 bzw. der inneren Rohre 16". Über die Laufräder 18 können die inneren Rohre 16" automatisch in Richtung ihrer Längsachsen verschoben und damit die auf ihnen festgelegten Wandsegmente 20 von ihren offenen (Po) in ihre geschlossenen Positionen (Pg) bzw. umgekehrt von ihren geschlossenen (Pg) in ihre offenen Positionen (Po) gebracht werden.

Auf der Rahmenkonstruktion 1 sind als Positionierungsvorrichtung 22' Laufschienen 22 festgelegt, auf welche die Laufräder 18 aufgleiten können. Vorzugsweise ist an beiden Stirnseiten des Trommelkörpers 7 je eine Laufschiene 22 angebracht. Die Laufschienen 22 liegen dabei außerhalb des Trommelkörpers 1, benachbart zu seinen, parallel zur Abbildungsebene der Fig. 1 verlaufenden Stirnseiten.

Aus der Zusammenwirkung der auf die inneren Rohre 16" einwirkenden Druck-Federn 28 und dieser Laufschienen 22 ergibt sich beim Drehen des Trommelkörpers 7 in die Umlaufbewegungsrichtung Δ in folgender Weise ein automatisches, vom Drehwinkel des Trommelkörpers 7 abhängiges Verschieben der Wandsegmente 20 von ihren geöffneten (Po) in ihre geschlossenen Positionen (Pg)).

Die Laufschiene 22 bzw. die im unteren Teil der Laufschiene 22 laufenden Laufräder 18 sind so angeordnet, dass die Wandsegmente 20, welche sich in unteren Bereich des Trommelkörpers 7 befinden, in der geschlossen Stellung bleiben. Am Ende der Laufschiene 22 neigt sich diese nach außen um das Öffnen der Wandsegmente 20 zu ermöglichen. Die Wandsegmente 20 werden mittels der Federn 28, die sich zwischen den beiden Rohren 16' und 16" der Teleskopstange 16 an deren verschweißten Enden befinden, nach außen gedrückt und somit geöffnet. An dem gegenüberliegenden abgeschrägten Ende der Laufschiene 22 vollzieht sich der Ablauf in umgekehrter Form, d.h. die Laufräder 18 gleiten auf die Laufschiene 22 auf, wodurch sie, und somit die inneren Rohre 16" sowie die Wandsegmente 20 in Richtung der Antriebswelle 8 gezogen werden. Der Trommelkörper 7 wird somit wieder geschlossen.

Durch die dargestellte Ausführung wird gewährleistet, dass der untere Teil des Behälters immer geschlossen bleibt. Dieser Öffnungs- und Schließungsablauf dient darüberhinaus dazu, die Wandsegmente 20 zu säubern und um ein Belüftung des Rottungsgutes zu gewährleisten. Weiters wird die Verklebung an den Wandsegmenten 20 vermindert.

Die die Wandsegmente 20 tragenden Teleskopstangen 16 bzw. inneren Rohre 16", welche - so wie in den Zeichnungsfiguren dargestellt - von den Federn 28 nach außen d.h. in die offene Position (Po) vorgespannt bzw. gedrückt werden, werden durch die Positionierungsvorrichtung 22' bzw. durch die Laufschienen 22, nach innen, also in die geschlossene Position (Pg) bewegt. Bei der oben beschriebenen ebenfalls möglichen Ausführungsform, bei welcher die die Wandsegmente 20 tragenden Teleskopstangen 16 von den Federn 28 nach innen (Pg) gezogen werden, ist die Positionierungsvorrichtung 22' natürlich so ausgelegt, dass sie die die Wandsegmente 20 tragenden Teleskopstangen 16 nach außen, also in die offene Position (Po) bewegt.

Neben den dargestellten Laufschienen 22 sind natürlich auch andere Positionierungsvorrichtungen 22' möglich. Beispielsweise können im Zusammenhang mit den weiter oben beschriebenen als Hydraulikzylinder ausgebildeten Teleskopstangen 16 elektrische, optische oder magnetische Sensoren an der Rahmenkonstruktion 1 der Kompostiertrommel befestigt sein, welche ein Steuersignal zum Öffnen oder Schließen der Wandsegmente 20 des Trommelkörpers 7 erzeugen. Durch diese oder ähnliche Ausführungsformen kann ebenfalls ein automatisches Schließen der Wandsegmente 20 an der Unterseite des Trommelkörpers 7 gewährleistet werden.

Weiters ist es möglich, die Laufräder 18 an der Außenseite des Trommelkörpers 7, auf eigens vorgesehenen Verlängerungen der Teleskopstangen 16 oder auf den an der Außenseite des Trommelkörpers 7 angebrachten Teleskopstangen 16 (vgl. Fig. 1c) anzubringen. Dies ist insbesondere mit der nachfolgend näher beschriebenen Ausführung der Wandsegmente 20 aus einzelnen Segmenten 20' vorteilhaft, da somit ein eigenes Laufrad 18 und eine eigene Laufschiene 22 bzw. Positionierungsvorrichtung 22' für jedes Segment 20' ermöglicht wird. In Fig. 1c ist der mitumlaufende Rahmen 1' aus mehreren Einzelrahmen aufgebaut, zwischen denen die später beschriebenen Schneidmesser 6 ins Innere des Trommelkörpers 7 eingreifen können.

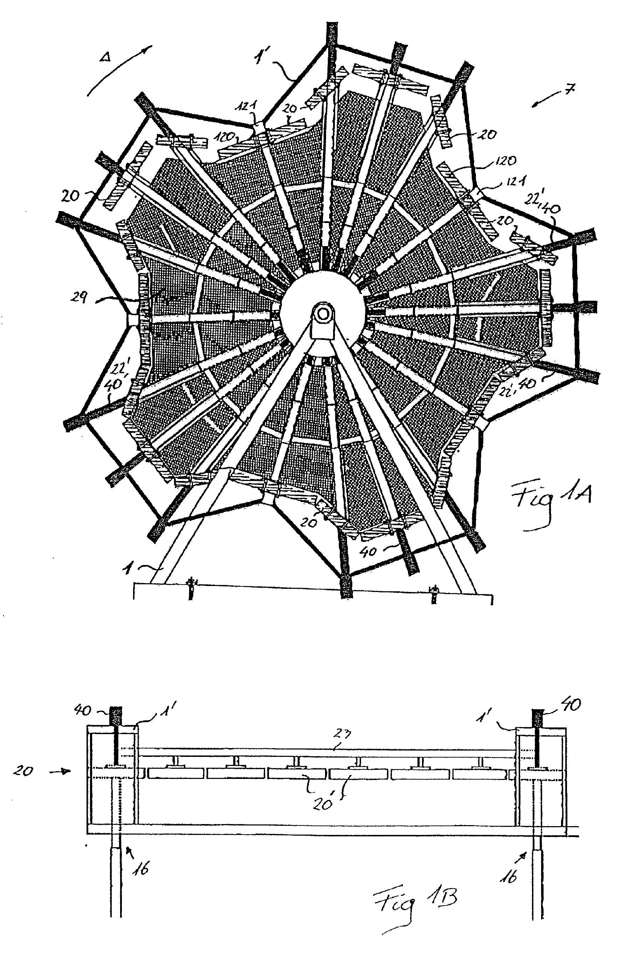

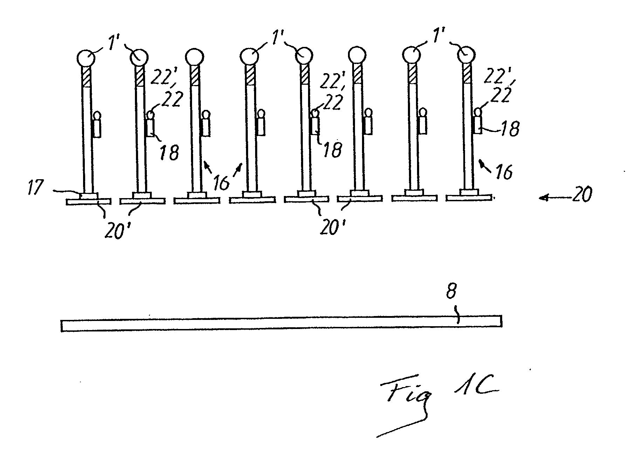

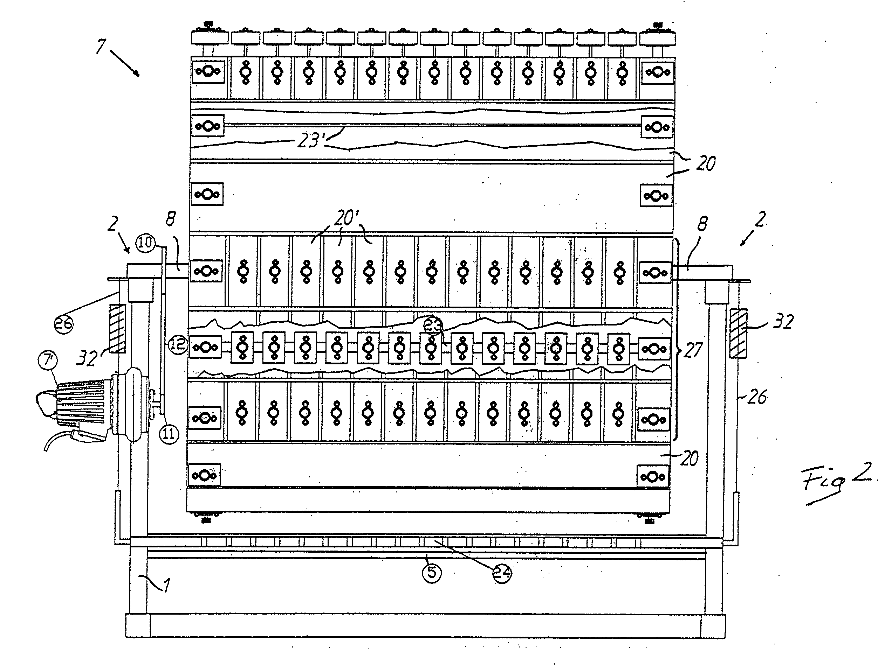

Bei der in Fig. 1 dargestellten Ausführung sind sowohl die Teleskopstangen 16 und die Laufräder 18 als auch die Laufschienen 22 an der Außenseite des Trommelkörpers 7 an dessen beiden Stirnseiten angebracht. Es ist aber auch möglich, dass die Teleskopstange 16 und die Laufräder 18 im Inneren des Trommelkörpers 7 und die Laufschiene 22 an der Außenseite des Trommelkörpers 7 angebracht sind. In diesem Fall sind in den die Stirnseiten des Trommelkörpers 7 bildenden Stirnwänden 29 Langlöcher 30 vorgesehen, durch welche die Laufräder 18 durchgreifen (Fig. 5). Um den Trommelkörper 7 möglichst abzudichten sind vorzugsweise an die Stirnwände 29 aufliegende Holzverschalungen 31 vorgesehen, welche an den inneren Rohren 16" befestigt sind. Diese sind folglich mit den inneren Rohren 16" beweglich, bewirken aber die Abdichtung des Trommelkörpers 7 im Bereich der Langlöcher 30.

Die erfindungsgemäße Ausführung einer Kompostiertrommel erlaubt ein besonders einfaches Ein- und Ausfüllen des Trommelkörpers 7. Weiters ist eine grobe Reinigung des Trommelkörpers 7 vor der Neubefüllung leicht vorzunehmen. Für die Befüllung an der Oberseite und die Entleerung an der Unterseite des Trommelkörpers 7 werden lediglich einige Wandsegmente 20 aus dem Trommelkörper 7 herausgezogen. Im Falle der dargestellten Ausführungsform erfolgt dies durch Herausziehen der mit den Wandsegmenten 20 verbundenen inneren Rohre 16" aus den Außenrohren 16'.

Die Öffnung an der Oberseite ermöglicht eine optimale Sauerstoffzufuhr, zusätzlich wird durch die Teleskopstangen 16 bzw. durch die diese verbindende Querstreben 23' im Inneren des Trommelkörpers 7 eine bessere Durchmischung des zu verrotenden Gutes erreicht. Außerdem wird einem Verschmutzen und Verkleben der Behälterwand entgegengewirkt, da durch das Öffnen einzelner Wandsegmente 20 großflächige Ablagerungen aufgebrochen werden. Nach der Befüllung des Trommelkörpers 7 ist der gleiche Ablauf in umgekehrter Reihenfolge durchzuführen. Hierfür werden die inneren Rohre 16" wieder bis zum Anschlag in die Außenrohren 16' eingeschoben.

Nach Belüftung und Verschluß der Kompostiertrommel kann durch Betätigen eines Hauptschalters die Stromversorgung eines Frequenzumformers und einer selbst programmierbaren Steuerung (SPS) eingeschalten werden. Bei einer bevorzugten Befüllungsart wird der Trommelkörper 7 zu Beginn der Befüllung zunächst langsam in eine Richtung gedreht um das Füllgut gut zu durchmischen. Nach der Mischung des Füllgutes kann das zu verwendende Automatikprogramm gestartet werden, welches den Rottungsprozess optimiert und sich je nach dem verwendeten Befüllgut richtet. Für übliche Rottungsprozesse sind hohe Temperaturen förderlich. Diese werden durch die isolierende Schicht bzw. die isolierenden Wandsegmente 20 gefördert. Aus diesem Grund ist der Trommelkörper 7 im Normalfall beim Rottungsprozess geschlossen.

Die dargestellte Kompostiertrommel verfügt beispielsweise über die Maße (Länge x Breite x Höhe) 3000 x 2300 x 2700 mm bei einem Gewicht von 1400 kg und einem Trommelvolumen bzw. Befüllvolumen 5,8 m³ bzw. 4,5 m³. Dieses Befüllvolumen entspricht einem Befüllgewicht von ungefähr 4000 kg. Der Energieaufwand für Motorisierung, Getriebe (Drehzahl: von 1 U/min-10 U/min) und die selbst programmierbare Steuerung (SPS) beträgt in etwa 3kW.

Ein übliches Problem, vor allem bei kleineren Trommel-Kompostieranlagen, besteht darin, dass eigene Zerkleinerungsvorrichtungen für das zu kompostiernde Gut vorgesehen werden müssen, die z.B. auf schnell rotierenden Walzen angeordnete Messer aufweisen. Diese Vorrichtungen werden in der eigentlichen Kompostieranlage vorgeschaltet. Trotzdem ist auch bei vorhergehender Zerkleinerung eine Klumpenbildung bzw. Versprödung des Strauchschnitts beim Verrottungsprozeß nicht immer vollständig zu vermeiden.

Die vorliegende Erfindung sieht im Zusammenhang mit der Ausformung der Trommelwand aus einzelnen Wandsegmenten 20 eine einfache Methode vor, die Zerkleinerung der Klumpen am Ende des Verrottungsprozeß in der Trommelkompostanlage selbst und ohne vorgeschaltete Zerkleinerungsvorrichtung vorzunehmen.

Dafür ist vorgesehen, spezielle Schneidmesser 6 in den Trommelkörper 7 eingreifen zu lassen (Fig.1). Diese können nach Beendigung des Rottungsprozesses zugeschalten werden. Die Schneidmesser 6 sind dazu verschwenkbar an der Rahmenkonstruktion 1 gelagert und durch in den Wandsegmenten 20 vorgesehene Schlitze in den Trommelkörper 7 hinein verschwenkt.

Dies ist gemäß Fig. 1 und 2 so realisiert, dass die Schneidmesser 6 auf einem Schneidmesserbalken 24 montiert sind, welcher an der Rahmenkonstruktion 1 befestigt und an seinem ersten Ende 24' drehbar gelagert ist. Es ist aber auch möglich, die Schneidmesser 6 unmittelbar drehbar an dem Schneidmesserbalken 24 zu lagern. Dieser Schneidmesserbalken 24 ist dergestalt an der Rahmenkonstruktion 1 festgelegt, dass er von einer Eingriffsposition, in welcher die Schneidmesser 6 in den Trommelkörper 7 hineinragen, in eine ausgerückte Position, in welcher die Schneidmesser 6 vollständig aus dem Trommelkörper 7 heraus gezogen sind, verschwenkbar ist. Beispielsweise besteht der Schneidmesserbalken 24 aus einem Formrohr 50/50, auf dem sich zwölf einzelne Schneidmesser 6 befinden, welche mittels Schrauben befestigt sind. Jedes dieser Schneidmesser 6 besteht aus einem Winkeleisen, auf dem ein geschärftes Flacheisen aufgeschweißt ist.

Der Eingriff der Schneidmesser 6 erfolgt über ein bzw. mehrere Gegengewichte 32, die den Schneidmesserbalken 24 in seine Eingriffsposition vorspannen. Hierfür ist der Schneidmesserbalken 24 mittels eines Seilzuges 26 über Laufrollen an der Rahmenkonstruktion 1 mit dem Gegengewicht 32 verbunden (vgl. Fig. 2). Je nach Gewichtsbelastung kann der Schneiddruck gegenüber dem Rottungsgut eingestellt werden. Das Vorsehen eines Gegengewichtes 32 bietet den Vorteil, dass bei sperrigen Gut die Schneidmesser 6 einfach weggedrückt und somit nicht beschädigt werden. Statt eines Gegengewichtes kann natürlich auch eine Feder oder ähnliches zum Vorspannen der Schneidmesser 6 vorgesehen sein.

Bei der in Fig. 1 gezeigten Ausführung ist weiters eine zweite Messerreihe mit Schneidmessern 6' vorgesehen. Diese Schneidmesser 6' sind umlaufend angebracht und bewegen sich mit dem Trommelkörper 7 in Richtung der Umlaufbewegungsrichtung Δ mit, wodurch die zu zerkleinernden Teile Klumpen und Sträucher durch die beiden Messerreihen 6, 6' gedrückt werden und dadurch zerschnitten werden. Die umlaufenden Schneidmesser 6' sind an der Außenseite des Trommelkörpers 7 angebracht und können von außen eingeklappt werden. Dadurch, dass alle Schneidmesser 6, 6' außen am Trommelkörper 7 angebracht sind, sind im Betriebsfall alle das Rottungsgut berührten Teile aus Holz. Nur beim Zerkleinern werden Schneidmesser 6, 6' aus Metall zugeschaltet. Dadurch, dass die Schneidmesser 6, 6' erst am Ende des Rottungsprozesses zugeschalten werden und nicht permanent in den Trommelkörper 7 eingreifen, verläuft der Verrotungsprozeß weitgehend ungestört, d.h. ohne Kontakt zu metallischen Gegenständen. Die Schneidmesser 6, 6' sind klappbar ausgeführt um bei Klumpen, welche größere Widerstände bieten, ausweichen zu können.

Natürlich können auch innen liegende mitlaufende Schneidmesser 6' vorgesehen sein. Diese im Inneren des Trommelkörpers 7 angebrachten mitlaufenden Schneidmesser 6' sind beispielsweise fest mit den Wandsegmenten 20 verbunden.

Bei außen liegenden feststehenden Schneidmesser 6 ist die Behälterform mittels der Wandsegmente 20 zweckmäßig so ausgeführt, dass der Trommelkörper 7 nach außen gerichtete Kuppen 27 aufweist, auf deren Höhe die Schneidmesser 6 in den Behälter eingreifen können. Im Bereich dieser Kuppen 27 sind die Wandsegmente 20 radial geschlitzt und bilden so einzelnen Segmente 20' aus (vgl. Fig. 1b, 2, 4b, 4c). Diese Segmente 20' können jeweils über eine Teleskopstange 16 mit einer Rundscheibe 9 verbunden sein (Fig. 4b) oder auch auf einer gesonderten radial angeordneten Stahlbrücke 23 befestigt sein (Fig. 4c). In letzterem Fall sind auf jeder Stahlbrücke 23 sind in regelmäßigen Abständen Formeisen mit Haltelaschen für die Segmente 20' aufgeschweißt (vgl. auch Fig. 1).

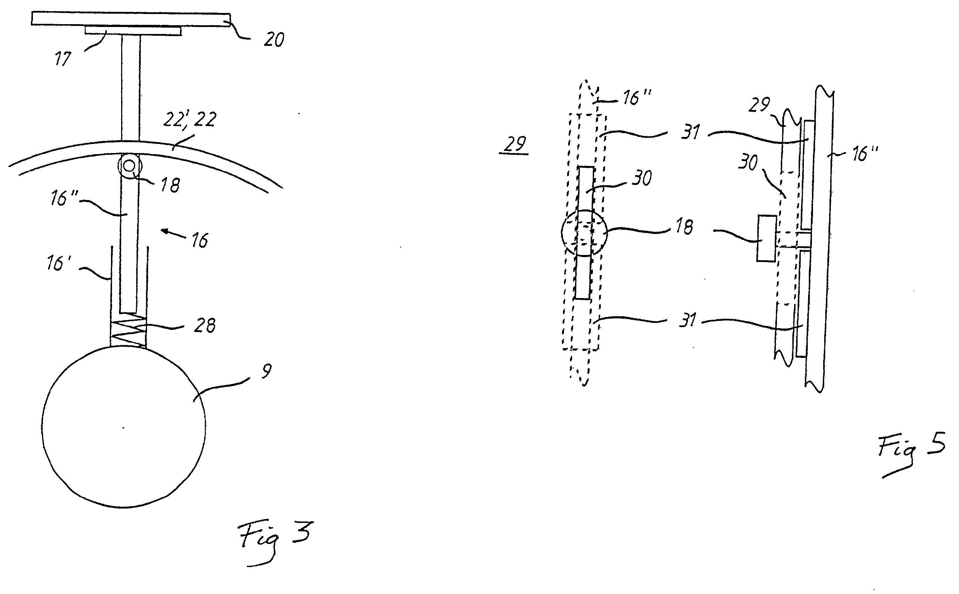

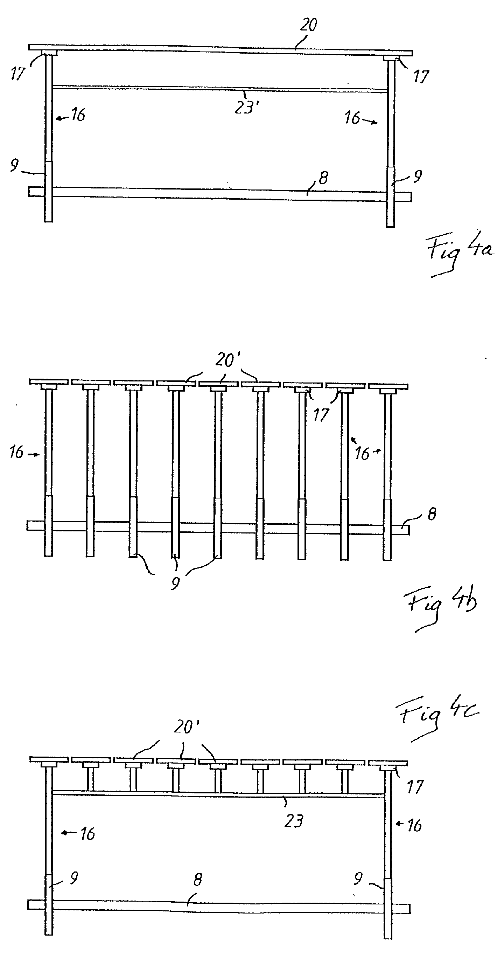

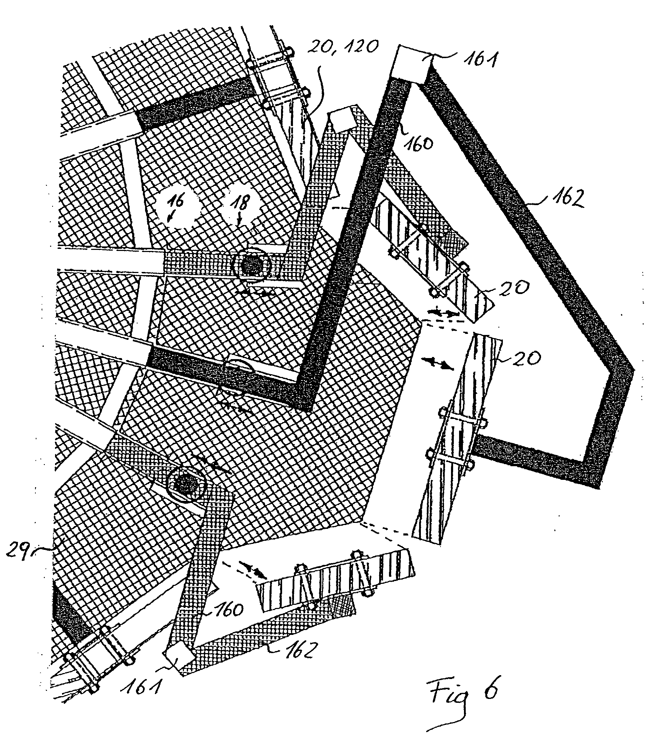

Bei einer bevorzugten Ausführungsform, bei der keine zusätzlichen Metallteile im Innerem des Trommelkörpers 7 vorgesehen werden müssen, erfolgt die Verbindung der einzelnen Segmente 20' an der Außenseite des Trommelkörpers 7. Hierzu sind beispielsweise, wie in Fig. 6 skizziert, die Teleskopstangen 16 mittels geeigneter Umlenkschienen 160 verlängert. Diese im vorliegenden Fall zwei Umlenkschienen 160 pro Wandsegment 20 sind jeweils über einen Verbindungsbalken 161 miteinander verbunden. An diesen Verbindungsbalken 161 ist für jedes Segment 20' des Wandsegmentes 20 ein Halterohr 162 angebracht. Die Verbindungsbalken 161 sind so ausgeführt, dass sie weiter innen, d.h. näher zur Trommelachse gelegen sind als die Wandsegmente 20. Die Schneidmesser können somit zwischen den Haltenrohren 162 durchgeführt werden und über die geschlitzten Wandsegmente 20 ins Innere der Trommel eingreifen.

Die im Trommelradius weiter innen liegenden Wandsegmente 20 müssen nicht geschlitzt ausgeführt werden und dienen zur Stabilisierung des Trommelkörpers 7. Natürlich ist aber auch möglich, den gesamten Trommelkörper 7 mit geschlitzten Wandsegmenten 20 auszuführen und keine speziellen Kuppen 27 vorzusehen.

Die Teilung der weiter außen gelegenen Wandsegmente 20 in die einzelnen Segmente 20' ermöglicht es, dass die Schneidmesser 6 in den Innenteil des Trommelkörpers 7 eingreifen können. Für die Belüftung bzw. für die Reinigung der Segmente 20' können die Stahlbrücken 23 aus dem Trommelkörper 7 gelöst werden. Dies erfolgt auf analoge Weise wie das weiter oben beschriebene Lösen einzelner Wandsegmente 20. Es ist aber auch möglich, lediglich die Segmente 20' von den Stahlbrücken 23 zu lösen.

Die Schlitze selbst tragen zur zusätzlichen Belüftung des Behälters bei, wobei das Verstopfen derselben durch das Öffnen der Wandsegmente 20 und durch den Eingriff der Schneidmesser 6 bestmöglich verhindert wird. Bei einer bevorzugten Ausführungsform ist vorgesehen, die Schlitze mit verstellbarer Breite auszuformen. Dies kann beispielsweise über einen eigenen Klappmechanismus für die Segmente 20' oder durch eigene an den Segmenten 20 ' verschiebbar angebrachte Holzteile erfolgen. Durch die Ausrichtung der Segmente 20' zueinander kann die Breite des Schlitzes eingestellt werden. Dies ermöglicht es beispielsweise nach erfolgter Zerkleinerung, die Messer 6, 6' zu entfernen und andere, breitere Werkzeuge, beispielsweise spezielle Siebe zur Siebung des Rottungsgutes, in den Trommelkörper 7 eingreifen zu lassen.

Bei einer weiteren Ausführungsform ist es möglich, die Kuppen 27 als ganzes austauschbar zu gestalten. Dafür sind mehrere geschlitzte Wandsegmente 20, beispielsweise über mehrere Querbalken, fest miteinander verbunden. Somit kann die gesamte Kuppe 27 in einem Arbeitsschritt ausgetauscht werden. Dies bietet die Möglichkeit, unterschiedliche Kuppen 27 mit auf bestimmte Werkzeuge spezialisierten Schlitzbreiten vorzusehen. Beispielsweise können Kuppen 27 mit Schlitzen für eingreifende Schneidmesser 6, 6' oder auch für andere eingreifende Werkzeuge wie Zerkleinerungswalzen oder Hammerwalzen für Steinobst vorzusehen werden. Die abnehmbare Kuppe 27 ermöglicht weiters ein besonders einfaches Befüllen und Entleeren.

Sobald der Vorgang der Zerkleinerung abgeschlossen ist, können die Schneidwerkzeuge wieder in die Halterung zurückgestellt und gesichert werden. In weiterer Folge wird der Trommelkörper 7 wieder in die Befüllposition gestellt, um die Wandsegmente 20 herausnehmen zu können. Sobald diese entfernt und verstaut sind, ist der Trommelkörper 7 soweit weiterzudrehen, bis sich der Öffnungsschlitz vertikal im unteren Bereich befindet. Anschließend kann das kompostierte Gut aus der Trommel entleert werden. Der entstandene Fertigkompost kann abgesackt oder offen entsprechenden Verwendungen zugeführt werden. Anschließend ist die Kompostiertrommel wieder in die Befüllstellung zurückzustellen, der Hauptschalter in OFF Position zu stellen und der Trommelkörper 7 zu reinigen.

## Patentansprüche

1. Kompostiertrommel zur Entsorgung von biologischen Abfällen, umfassend einen Trommelkörper (7), welcher vorzugsweise zylindrisch ausgebildet ist und in einer Rahmenkonstruktion (1) drehbar gelagert ist, wobei der Trommelkörper (7) aus mehreren einzelnen Wandsegmenten (20) gebildet ist, **dadurch gekennzeichnet, dass** alle oder mehrere Wandsegmente (20) auf Teleskopstangen (16) befestigt sind, welche die Bewegung der Wandsegmente (20) in zumindest eine geschlossenen Position (Pg) und eine offenen Position (Po) erlauben.

2. Kompostiertrommel nach Anspruch 1, **dadurch gekennzeichnet, dass** die Teleskopstangen (16) durch Federn (28) in die Richtung einer Position (Po, Pg) vorgespannt sind.

3. Kompostiertrommel nach Anspruch 1 oder 2, **dadurch gekennzeichnet, dass** die Teleskopstangen (16) jeweils ein Außenrohr (16') und ein in diesem geführtes inneres Rohr (16") aufweisen, wobei ein Wandsegment (20) auf einem dieser Rohre (16',16") festgelegt ist und dass jenes Rohr (16', 16"), auf welchem das Wandsegment (20) festgelegt ist, gegenüber dem anderen Rohr (16", 16') durch eine Feder (28) in Richtung der geschlossenen Position (Pg) oder in Richtung der offenen Position (Po) vorgespannt ist.

4. Kompostiertrommel nach Anspruch 3, **gekennzeichnet durch** eine an der Rahmenkonstruktion (1) festgelegte Positionierungsvorrichtung (22'), welche die die Wandsegmente (20) tragenden Rohre (16', 16") der Teleskopstangen (16) gegen die Vorspannkraft der Feder (28) in Richtung der offenen Position (Po) oder in Richtung der geschlossenen Position (Pg) bewegt.

5. Kompostiertrommel nach Anspruch 4, **dadurch gekennzeichnet, dass** auf den Wandsegmente (20) tragenden Rohren (16', 16") Laufräder (18) festgelegt sind und die Positionierungsvorrichtung (22') durch zumindest eine bogenförmige Laufschiene (22) gebildet ist, auf welche die Laufräder (18) bei Umlaufen des Trommelkörpers (7) aufgleiten.

6. Kompostiertrommel nach einem der vorstehenden Ansprüche , **dadurch gekennzeichnet, dass** die Wandsegmente (20) aus einem stark isolierenden Material, insbesondere aus Holz gefertigt sind.

7. Kompostiertrommel nach einem der vorstehenden Ansprüche, **dadurch gekennzeichnet, dass** zumindest ein Schneidmesser (6) vorgesehen ist, welches an der Rahmenkonstruktion (1) verschwenkbar gelagert und durch in den Wandsegmenten (20) vorgesehene Schlitze in den Trommelkörper (7) hinein verschwenkbar ist.

8. Kompostiertrommel nach Anspruch 7, **gekennzeichnet durch** einen eine Vielzahl von Schneidmessern (6) tragenden Schneidmesserbalken (24), der von einer Eingriffsposition, in welcher die Schneidmesser (6) in den Trommelkörper (7) hineinragen in eine ausgerückte Position, in welcher die Schneidmesser (6) vollständig aus dem Trommelkörper (7) heraus gezogen sind, verschwenkbar an der Rahmenkonstruktion (1) festgelegt ist.

9. Kompostriertrommel nach Anspruch 8, **gekennzeichnet durch** ein auf den Schneidmesserbalken (24) einwirkendes, diesen in die Eingriffsposition vorspannendes Gegengewicht (32).

10. Kompostiertrommel nach Anspruch 9, **dadurch gekennzeichnet, dass** das Gegengewicht (32) über einen Seilzug (26) auf den Schneidmesserbalken (24) einwirkt.

11. Kompostiertrommel nach einem der vorstehenden Ansprüche, **dadurch gekennzeichnet, dass** zumindest ein weiteres Schneidmesser (6') vorgesehen ist, welches am Trommelkörper (7), insbesondere an einem Wandsegment (20), befestigt ist.

12. Kompostiertrommel nach Anspruch 11, **dadurch gekennzeichnet, dass** das weitere Schneidmesser (6') an der Außenseite des Trommelkörpers (7) verschwenkbar gelagert und durch die in den Wandsegmenten (20) vorgesehene Schlitze in den Trommelkörper (7) hinein verschwenkbar ist.

13. Kompostiertrommel nach einem der Ansprüche 7-12, **dadurch gekennzeichnet, dass** der Trommelkörper (7) nach außen gerichtete Kuppen (27) aufweist, wobei lediglich die außen gelegenen, die Kuppen (27) bildenden Wandsegmente (20) mit Schlitzen zum Eingreifen der Messer (6, 6') versehen sind.

14. Kompostiertrommel nach Anspruch 13, **dadurch gekennzeichnet, dass** die außen gelegenen, jeweils eine Kuppe (27) bildenden Wandsegmente (20) fest miteinander verbunden sind und dass die Kuppen (27) als ganzes austauschbar am Trommelkörper (7) angebracht sind.
